# EUROPEAN PATENT APPLICATION

(11) **EP 2 166 079 A1**
(43) Date of publication of application: **24.03.2010**
(21) Application number: 09170324.9
(22) Date of filing: 15.09.2009
(51) Int. Cl.: C12C 5/04, C12C 12/00

(54) **Green coloured beer and method for the production thereof**

(30) Priority: 18.09.2008 HU 0800573
(71) Applicant: Szabó, Béla, H-8800 Nagykanizsa (HU)
(72) Inventor: Szabó, Béla, H-8800 Nagykanizsa (HU)
(74) Representative: Harangozo, Gabor

(57) **Abstract**

The present invention relates to green coloured beer made of a lager beer produced by a conventional technology and of a food colouring agent, said food colouring agent having a colour different from the colour of the initial beer. The green coloured beer according to the invention is characterized by containing a food colouring agent of blue colour.

The present invention further relates to a method of making such a green coloured beer.

## Description

The present invention generally relates to coloured beer and a method for the production thereof. More particularly, the present invention relates to green coloured beer and a method of producing green coloured beer.

For colouring or painting lager beers produced by conventional technologies, various methods have been known for a long time. Patent No. GB 365,208 discloses a method wherein a specific amount of green food colouring agent is added to a beer made by a conventional technology in order to produce green coloured beer.

The beer of the type Berliner Weisse is also a well-known drink, the pale stramineous yellow primary colour of which is painted, for example, green by adding the extract of woodruff thereto. This beer product is called Berliner Weisse Waldmeister.

A common feature of the above methods is that the green colour of the beer is achieved by adding a green colouring agent. As the colour of a lager beer is generally golden yellow, which might have either a lighter or a darker tone, an intensive, definite green colour cannot be provided to the beer by adding a green colouring agent thereto. In case of the addition of a small amount of green colouring agent, the beer will have a pale, light green colour, whereas the addition of a larger amount of green colouring agent results in a beer with a brownish green colour. Although such beers generally show an interesting and unusual colour, those do not even have the desired intensive and definite green colour.

It is an object of the present invention to provide green coloured beer having a more definite and higher green colour than that of the green coloured beers produced before.

The invention is based on the recognition that a definite, substantially high and intensive green colour can be obtained for a conventional lager beer by the addition of a blue colouring agent to the beer instead of the addition of a green colouring agent as used in the prior art. The invention is also based on the further recognition that so as to produce a beer with the desired intensive green colour, it is enough to use the blue colouring agent in a substantially smaller amount than normally applied (i.e. 10-100 mg/l, in general) for food colouring.

These and other objects are achieved by providing a beer that contains a blue food colouring agent so as to have a definite green colour. Furthermore, the above objects are also achieved by providing a method of making such a beer.

In order to make green coloured beer, according to the invention, a lager beer with an alcohol-content of 2 to 5 percentage by volume in general, produced by a conventional technology is taken as a basis. To the beer used as a basic component and typically having a golden yellow colour, a blue food colouring agent is added, the amount of which depends on the type, in particular on the original colour (more particularly, on the tone of the golden yellow colour) of the initial beer. The blue food colouring agent may include artificial colouring agent, for example E131 (Patent blue V), E132 (Indigo carmine) or E133 (Brilliant blue FCF), but may also include natural colouring agent, such as E163 (Anthocyanin).

So as to obtain a definite and intensive green colour to the beer, the required amount of the blue colouring agent varies in the range of 0,1 to 10 mg per litre depending on the type (in particular, on the colour) of the beer used. It is not allowed, however, that the amount of the colouring agent exceed the maximum value set forth in the food industrial regulations.

So as to modify the taste or the deliciousness of the beer painted by a blue colouring agent in order to obtain an intensive green colour therefor, additional substances may arbitrarily be added to it. Accordingly, a small amount of alcohol may be added to the green coloured beer for increasing the original alcoholic strength of the beer used. The taste of the green coloured beer may also be modified by adding, for example, sugar or other sweetener, natural or artificial flavouring or water thereto, thus allowing to make a unique and special beer product with respect to both of its colour and taste.

Concerning the production of the green coloured beer according to the invention, a particular example will now be described. It should be noted that the following exemplary method serves solely an illustrative purpose and cannot be regarded as any limitation of the scope of the present invention.

### Example:

0,8 mg of food colouring agent E131 (Patent blue V), 9,6 ml of alcohol and 10 g of sugar is added to 1 litre of lager beer having an alcohol-content of 4,5 percentage by volume. To the intensive green coloured beer thus obtained and having a silky flavour and increased alcohol-content, further flavourings may arbitrarily be added.

## Claims

1. Green coloured beer made of a lager beer produced by a conventional technology and of a food colouring agent, said food colouring agent having a colour different from the colour of the initial beer, **characterized in that** the green coloured beer contains a food colouring agent of blue colour.

2. The green coloured beer according to claim 1, **characterized in that** the blue food colouring agent is used in an amount ranging 0,1 to 10 mg/l depending on the type of the initial beer.

3. The green coloured beer according to claim 2, **characterized in that** the blue food colouring agent is an artificial colouring agent, preferably E131, or a natural colouring agent.

4. The green coloured beer according to any one of claims 1 to 3, **characterized in that** it contains additive alcohol, thereby the alcohol-content of the green coloured beer is higher than that of the initial beer.

5. The green coloured beer according to any one of claims 1 to 4, **characterized in that** it further comprises at least one additive selected from the group of sugar, other sweetener, natural or artificial flavourings and water.

6. A method of making green coloured beer from a lager beer produced by a conventional technology and a food colouring agent, said food colouring agent having a colour different from the colour of the initial beer, **characterized in that** a food colouring agent of blue colour is added to the initial beer.

7. The method according to claim 6, **characterized in that** the blue food colouring agent is added to the initial beer in an amount of 0,1 to 10 mg/l depending on the type of the initial beer.

8. The method according to claim 7, **characterized in that** the blue food colouring agent is selected from the group including artificial colouring agents, preferably E131, and natural colouring agents.

9. The method according to any one of claims 6 to 8, **characterized in that** alcohol is added to the initial beer to produce a beer with a higher alcohol-content than that of the initial beer.

10. The method according to any one of claims 6 to 9, **characterized in that** it further contains at least one of additive selected from the group of sugar, other sweetener, natural or artificial flavourings and water.
